(19) Europäisches Patentamt
European Patent Office
Office européen des brevets

(11) **EP 0 562 928 B1**

(12) **FASCICULE DE BREVET EUROPEEN**

(45) Date de publication et mention
de la délivrance du brevet:
**15.01.1997 Bulletin 1997/03**

(51) Int Cl.⁶: **C08F 10/00**, C08F 4/64

(21) Numéro de dépôt: **93400714.7**

(22) Date de dépôt: **19.03.1993**

(54) **Catalyseur de polymérisation des oléfines, son procédé d'obtention**

Katalysator für Olefinpolymerisation und Verfahren zur Herstellung davon

Catalyst for the polymerization of olefins and process for its manufacture

(84) Etats contractants désignés:
**AT BE DE ES FR GB IT NL PT SE**

(30) Priorité: **27.03.1992 FR 9203733**

(43) Date de publication de la demande:
**29.09.1993 Bulletin 1993/39**

(73) Titulaire: **ELF ATOCHEM S.A.**
**92800 Puteaux (FR)**

(72) Inventeurs:
• **Brun, Claude**
**F-64320 Idron (FR)**
• **Avaro, Michel**
**F-64170 Artix (FR)**

(56) Documents cités:
EP-A- 0 099 774      EP-A- 0 174 104
EP-A- 0 211 624      EP-A- 0 232 643
EP-A- 0 435 332

## Description

La présente invention concerne un catalyseur de polymérisation des oléfine se présentant sous la forme de prépolymère résultant de la prépolymérisation de l'éthylène seul ou en mélange avec une alpha-oléfine possédant de 3 à 8 atomes de carbone en présence d'un système catalytique constitué d'une part d'une composante catalytique contenant du titane, du magnésium, du chlore et éventuellement un donneur ou accepteur d'électrons et d'autre part un cocatalyseur. Ce catalyseur, sous forme de prépolymère, peut ultérieurement être utilisé tel quel dans la polymérisation des oléfines en l'absence d'appoint complémentaire de cocatalyseur. Il est caractérisé en ce que la distribution de tailles particulaires est plus étroite que la distribution de tailles particulaires de la composante catalytique.

Le document EP-A-O 232 643 décrit un procédé de traitement permettant de conserver la morphologie, au cours des diverses étapes de polymérisation des oléfines, du catalyseur sphérique de polymérisation contenant au moins un métal de transition, un composé du magnésium et un halogène caractérisé en ce que, en présence du catalyseur sphérique, on prépolymérise en présence d'un cocatalyseur choisi parmi les alkylaluminiums, au moins partiellement en suspension, de l'éthylène jusqu'à un degré de prépolymérisation adapté au procédé de polymérisation dans lequel le prépolymère sera mis ultérieurement en oeuvre, un sphéroprotecteur produit de réaction d'alkylaluminium et de donneur d'électrons étant associé aux différents composant au plus tard après la prépolymérisation.

Le document EP-A-O 099 774 décrit un procédé de fabrication de polyoléfines comportant, d'une part, une étape de prépolymérisation par mise en contact d'alpha-oléfines avec un système catalytique de type Ziegler comprenant un catalyseur solide à base essentiellement de magnésium, de métal de transition et d'halogène et un cocatalyseur constitué de composés organométalliques, et, d'autre part, une étape de polymérisation ou de copolymérisation en phase gazeuse, au moyen d'un lit fluidisé, par mise en contact d'une ou plusieurs alpha-oléfines avec le prépolymère préparé dans l'étape précédente, procédé caractérisé en ce que le prépolymère et le polymère ou le copolymère d'alpha-oléfines se présentent sous forme de poudres constituées de particules ayant des teneurs en métal de transition et des diamètres moyens en masse caractéristiques pour chacun d'eux, et en ce que la largeur de distribution granulométrique de la poudre de prépolymère est étroite et parfaitement contrôlée.

Le but de l'invention réside dans l'élimination des plus fines particules de la composante catalytique qui, en cours de polymérisation ultérieure des oléfines génèrent de fines particules de polymère.

Il est connu que sous l'effet de la polymérisation des oléfines, particulièrement dans le cas de la polymérisation en phase gazeuse, en présence de composante catalytique solide, telle que celles à base de titane supporté sur chlorure de magnésium, les particules de composante par éclatement ou par atrition génèrent de fines particules catalytiques qui entraînent la formation de fines particules de polymère

Dans le réacteur de polymérisation en phase gazeuse, ce sont les fines particules qui se chargent le plus par tribo-électricité. Les fines particules très électrostatiques se plaquent à la paroi et favorisent la formation de croûtes par gélification. Les microfines particules ont également tendance à se désengager du lit fluidisé pour favoriser les bouchages dans les circuits de recyclage. Enfin dans les systèmes de convoyage des poudres, les fines particules se chargent également par triboélectricité et peuvent présenter un risque de décharge électrostatique violente lors des transferts.

Pour remédier à ces inconvénients la composante catalytique est mise sous forme de prépolymère. Dans ce cas une oléfine est prépolymérisée dans des conditions douces, en présence de la composante catalytique, de façon à atteindre un faible taux d'avancement de polymérisation, de l'ordre de quelques dizaines de grammes de polyoléfine formée par gramme de composante catalytique. Ce prépolymère actif est ensuite utilisé comme système catalytique dans la polymérisation des oléfines. Cette technique permet de consolider la composante catalytique atténuant ainsi la formation ultérieure en cours de polymérisation de fines particules de polymère. Toutefois, cette technique ne permet pas d'éliminer les fines particules initiales de composante catalytique ou formées en cours de prépolymérisation malgré toutes les préautions prises.

De façon idéale, un grain de catalyseur donne un grain de prépolymère qui à son tour donne un grain de polymère. Le grain de catalyseur grossit au cours de la polymérisation sensiblement proportionnellement à la (Productivité)$^{1/3}$. Les courbes de distribution granulométrique du catalyseur et du polymère sont homothétiques. Ainsi moins la composante catalytique contient de fines particules, moins le polymère final contient de fines particules. Ces distributions granulométriques homothétiques peuvent être définies par une expression mathématique permettant de quantifier la largeur de distribution granulométrique ou l'étalement que l'on appelle SPAN. Le SPAN correspond à $\frac{D90 - D10}{D50}$, D90, D50 et D10 étant les diamètres respectifs en-dessous desquels se trouvent 90 %, 50 % et 10 % en masse des particules.

L'objet de la présente invention est de limiter au maximum la présence des fines particules de la composante catalytique afin, par voie de conséquence, de limiter la formation de fines particules dans le polymère final. Ce prépolymère catalytique caractérisé en ce que sa distribution de tailles particulaires est plus étroite que celle de la composante catalytique utilisé pour la prépolymérisation, est particulièrement intéressant parce que sa restriction de distribution de tailles particulaires est due essentiellement à l'élimination des fines particules de ladite composante. Ce prépolymère catalytique, dont le degré d'avancement, c'est-à-dire le nombre de grammes de prépolymère formé par gramme de composante catalytique, est de préférence inférieur à 250 g de prépolymère par gramme de composante catalytique, possède habituellement un SPAN réduit d'au moins 15 % par rapport au SPAN de la composant catalytique. Cette réduction du SPAN est essentiellement due à l'élimination des fines particules de composante catalytique.

L'objet de l'invention, l'élimina:ion des fines particules de composante catalytique, est paradoxalement atteint par élimination des grosses particules en fin de prépolymérisation effectuée en phase gazeuse ou en suspension, et en présence de résine thermoplastique comme poudre de charge, de l'éthylène seul ou en mélange avec une alpha-oléfine possédant de 3 à 8 atomes de carbone en présence de la composante catalytique. La caractéristique du procédé permettant d'éliminer ces fines particules est la prépolymérisation en présence d'une poudre de charge telle qu'une résine thermoplastique qui est, au moins partiellement, éliminée après la prépolymérisation. De façon générale la poudre de charge doit posséder au moins une fraction granulométrique de taille des particules supérieure aux grosses particules de prépolymère catalytique afin de pouvoir l'éliminer facilement. De façon inattendue, il est constaté que la majorité des fines particules des prépolymères catalytiques se sont agglomérées sur les particules de résine thermoplastique. Il suffit alors pour éliminer les fines particules formées de prépolymère d'éliminer au moins les plus grosses de ces particules de résine thermoplastique de charge par tout moyen connu tel que par tamisage en retenant sur le tamis lesdites particules. Plus précisément le procédé de fabrication du prépolymère catalytique consiste à prépolymériser en phase gazeuse ou en suspension, de l'éthylène seul ou en mélange avec une alpha-oléfine possédant de 3 à 8 atomes de carbone plus en général de l'hydrogène et de l'azote, en présence d'un système catalytique constitué d'une part d'une composante catalytique contenant du titane, du magnésium, du chlore et éventuellement d'un donneur ou accepteur d'électrons et d'autre part d'un cocatalyseur caractérisé en ce que la prépolymérisation s'effectue en présence d'une poudre de charge et en ce que après formation du prépolymère sont éliminées au moins partiellement les particules de poudre de charge.

Pour faciliter cette élimination, est choisie une poudre de charge possédant une granulométrie moyenne de valeur supérieure à :

D50 du catalyseur x (degré d'avancement de prépolymérisation)$^{1/3}$.

Pour séparer facilement la poudre de charge, il est souhaitable de choisir une poudre de charge telle que son D10 soit supérieur à :

D90 du catalyseur x (degré d'avancement du prépolymère)1/3

La composante catalytique mise en oeuvre est connue en elle-même et peut être prise parmi n'importe quelle composante catalytique commerciale contenant du titane, du chlore et du magnésium. Elle est habituellement le résultat de la combinaison d'au moins un composé du titane, un composé de magnésium, de chlore et éventuellement un composé d'aluminium et/ou un donneur ou accepteur d'électrons ainsi que de tout autre composé utilisable dans ce type de composante.

Le composé du titane est choisi habituellement parmi les composés chlorés du titane de formule $T_i(-OR)_xCl_{4-x}$ dans laquelle :

- R est un radical hydrocarboné aliphatique ou aromatique de $C_1$ à $C_{14}$, ou $COR_1$ avec $R_1$ un radical hydrocarboné aliphatique ou aromatique de $C_1$ à $C_{14}$
- x est un nombre de 0 à 3

Le composé de magnésium est habituellement choisi parmi les composés de formule $Mg(OR_2)_nCl_{2-n}$, dans laquelle

- $R_2$ est l'hydrogène ou un radical hydrocarboné linéaire ou cyclique et
- "n" est un nombre inférieur ou égal à 2

Le chlore peut provenir directement de l'halogénure de titane et/ou de l'halogénure de magnésium. il peut également provenir d'un agent chlorant indépendant tel que l'acide chlorhydrique ou un halogénure organique comme le chlorure de butyle.

Le donneur ou accepteur d'électrons est un composé organique liquide ou solide connu pour entrer dans la composition de ces composantes catalytiques. Le donneur d'électrons peut être un composé mono ou polyfonctionnel avantageusement choisi parmi les acides carboxyliques aliphatiques ou aromatiques et leurs esters alcoyliques, les éthers aliphatiques ou cycliques, les cétones, les esters vinyliques, les dérivés acryliques, en particulier acrylates ou méthacrylates d'alcoyle et les silanes. Conviennent notamment comme donneur d'électrons les composés tels que paratoluate de méthyle, benzoate d'éthyle, acétate d'éthyle ou de butyle, éther éthylique, para-anisate d'éthyle, dibutylphtalate, dioctylphtalate, diisobutylphtalate, tétrahydrofuranne, dioxane, acétone, méthylisobutylcétone, acétate de vinyle, méthacrylate de méthyle et les silanes tels que phényltriéthoxysilane, les alcoxysilanes aromatiques ou aliphatiques.

L'accepteur d'électrons est un acide de Lewis, choisi de préférence parmi les chlorures d'aluminium, le trifluorure de bore, le chloranile ou encore les alcoylaluminiums et alcoylmagnésiums.

La composante catalytique se présente sous la forme d'un complexe entre au moins Mg, Ti,Cl, le titane se trouvant sous forme chlorée de $Ti^{IV}$, de $Ti^{III}$ ou de mélange des deux, avec éventuellement un donneur ou accepteur d'électrons.

Le cocatalyseur de prépolymérisation est habituellement choisi parmi les alkylaluminiums de formules générales $AlR_xH_z$ et $AlR_xCl_yH_z$ ou $x + z$ et $x + y + z = 3$ et dans lesquelles R représente un radical hydrocarboné linéaire, ramifié ou cyclique possédant de 1 à 14 atomes de carbone; A titre d'exemples peuvent être cités : $Al(C_4H_9)_3$, $Al(C_4H_9)_2H$, $Al(C_2H_5)_3$, $Al(C_6H_{13})_3$, $AlCl(C_4H_9iso)_2$. Peuvent être également cités les aluminoxanes et les aluminosiloxanes.

La prépolymérisation en phase gazeuse de l'éthylène seul ou en mélange avec une alpha-oléfine possédant de 3 à 8 atomes de carbone s'effectue en présence d'une poudre de charge constituée d'une résine thermoplastique généralement polyoléfinique et plus particulièrement de polypropylène, de polyéthylène ou de copolymère d'éthylène et d'alpha-oléfine possédant de préférence de 3 à 8 atomes de carbone. La taille des particules de poudre de charge est choisie en fonction du degré d'avancement souhaité du prépolymère et de la taille du catalyseur. Pour un degré d'avancement de 100g/g de catalyseur et un catalyseur de D50 de 50 μm, la taille moyenne des particules de poudre de charge se situe entre 300 et 2000 μm. La poudre de charge est habituellement utilisée en une quantité représentant environ 5 à 80 % en poids du prépolymère catalytique obtenu en fin de prépolymérisation c'est-à-dire comprenant le prépolymère formé plus la poudre de charge. Outre le fait que la poudre de charge facilite en cours de prépolymérisation la dispersion de la composante catalytique, son but essentiel selon l'objet de l'invention est de permettre la fixation sur ses particules de fines particules de prépolymère formées. Ces fines particules de prépolymère sont habituellement inférieures à 100 μm.

La prépolymérisation peut s'effectuer entièrement en phase gazeuse. Cette prépolymérisation est réalisée en réacteur agité. L'éthylène ou un mélange d'éthylène et d'alpha-oléfine est polymérisé en présence d'un limitateur de chaine, éventuellement d'azote pour diluer, d'un cocatalyseur choisi parmi les alkylaluminiums connus pour cet emploi. La température de polymérisation est habituellement comprise entre 0 et 110°C et de préférence entre 10 et 60°C pour une pression totale inférieure à 20 bars absolus constitués essentiellement de gaz inerte. L'alimentation en monomère dans le réacteur est contrôlée. Une vitesse favorable d'alimentation est inférieure ou égale à 500 Nl x $h^{-1}$ x $g^{-1}$ de catalyseur. La poudre de charge est introduite à un stade quelconque de la prépolymérisation, mais de préférence en début de prépolymérisation.

Lorsque la prépolymérisation est achevée, c'est-à-dire lorsque le degré d'avancement de polymérisation est atteint, tout ou partie de la poudre de charge est éliminée. De préférence est éliminée la fraction granulométrique du mélange sec ayant un diamètre de particules supérieur à : D90 catalyseur x (degré d'avancement du prépolymère) $^1/_3$ Cette fraction renferme une grande partie de la poudre de charge.

La prépolymérisation peut s'effectuer en suspension dans un hydrocarbure sous agitation en régime turbulent. On prépolymérise l'éthylène, en présence éventuellement d'un limitateur de chaîne et d'un cocatalyseur choisi parmi les alkylaluminiums connus pour cet emploi, à une température comprise entre 0 et 110°C, de préférence entre 20 et 60°C, pour une pression totale inférieure à 20 bars absolus constituée essentiellement de gaz inerte tel que l'azote. Il est recommandé de contrôler l'alimentation en monomère dans le réacteur. Une vitesse moyenne d'alimentation favorable est inférieure ou égale à 500 Nl. x $h^{-1}$ x $g^{-1}$ de catalyseur. La prépolymérisation en suspension est poursuivie jusqu'à un degré de prépolymérisation adapté au procédé de polymérisation ultérieur, le degré de prépolymérisation étant défini par le rapport de la somme du poids de prépolymère formé plus le poids de catalyseur mis en oeuvre sur le poids de catalyseur mis en oeuvre.

A un stade quelconque de la prépolymérisation on ajoute une quantité de poudre de charge. En fin de prépolymérisation le mélange, poudre de charge prépolymère, est récupéré à sec sous azote après évaporation, cette dite évaporation pouvant avoir lieu avant ou après l'addition de poudre de charge.

La prépolymérisation peut s'effectuer dans une première étape en suspension puis en phase gazeuse dans une seconde étape. On procède à la prépolymérisation en suspension dans les conditions décrites précédemment jusqu'à un degré d'avancement réduit de prépolymérisation, de préférence inférieure à 20 g de (co)polymère par gramme de catalyseur.

A ce stade, le prépolymère est isolé puis repris dans un système de prépolymérisation en phase gazeuse de façon à passer du degré d'avancement réduit de polymérisation au degré de prépolymérisation adapté au procédé de polymérisation ultérieur.

Cette partie de prépolymérisation en phase gazeuse s'effectue dans les conditions habituelles au procédé de polymérisation de l'éthylène en phase gazeuse. On peut ajouter la poudre de charge à un stade quelconque de prépolymérisation. De façon préférentielle la prépolymérisation en phase gazeuse est réalisée à une température comprise entre 30 et 110°C sous une pression totale inférieure ou égale à 20 bars.

Cette prépolymérisation en phase gazeuse est poursuivie jusqu'à l'obtention d'un degré de prépolymérisation adapté au procédé de polymérisation ultérieur. L'alimentation en monomère dans le réacteur est contrôlée. Une vitesse moyenne d'alimentation favorable est inférieure ou égale à 500 Nl.x $h^{-1}$ x $g^{-1}$ de catalyseur.

Par économie, il n'est toutefois pas nécessaire d'éliminer trop de poudre de charge initial, car la poudre récupérée n'est plus utilisable ce qui entraîne la perte du composé catalytique aggloméré sur les particules de poudre. D'une façon générale on préfère éliminer les particules de poudres de charge de diamètre supérieur à 1000 µm et éventuellement supérieur à 500 µm. la séparation des particules à éliminer du prépolymère catalytique à conserver peut se faire par tamisage. Le tamisage en vue de retirer la poudre de charge est effectué sous atmosphère inerte par tout moyen connu de tamisage. La fraction recueillie sous le tamis est stockée sous atomosphère inerte.

Le prépolymère catalytique récupéré peut être utilisé tel quel comme catalyseur de polymérisation des oléfines, en particulier des oléfines de $C_2$ à $C_8$ ou de leurs mélanges si la quantité de cocatalyseur se trouve en excès dans la prépolymérisation. Il peut également être utilisé en tant que catalyseur en association avec un cocatalyseur tel que précédemment décrit.

Ce catalyseur de polymérisation des oléfines sous forme de prépolymère est particulièrement adapté à la polymérisation en phase gazeuse des oléfines et plus particulièrement de l'éthylène seul ou en mélange avec une alpha-oléfine possédant de 3 à 8 atomes de carbone pour l'obtention de poudres de polymère à faible taux de fines particules.

les exemples suivants illustrent l'invention sans la limiter.

EXEMPLE 1

Dans un réacteur sphérique de 8,2 l, équipé d'une double enveloppe pour réguler la température, d'un système d'agitation tournant à 100 t/mn on introduit après purge à l'azote à 60°C sous une atmosphère d'azote successivement :

- 0,5 l d'hexane
- 3,5 mM de tri-n-hexylaluminium (THA)
- 5 g d'une composante catalytique à base de Mg. Ti et Cl ayant un D50 de 48 µm et un SPAN de 1,4
- 1 bar d'azote
- 2 bars d'hydrogène
- 65 Nl d'éthylène en 1h30 à l'aide d'un dispositif de contrôle de débit

On décomprime le réacteur et on introduit sous une atmosphère d'azote 100 g de polyéthylène linéaire de basse densité (LLDPE). Les caractéristiques granulométrique de cette poudre de charge sont : D50 = 1194 µm pour un SPAN de 5,26.

On évapore à 60°C par balayage à l'azote l'hexane pour obtenir une poudre sèche.

On ajoute toujours sous agitation à 60°C successivement :

- 1 bar d'azote
- 2 bars d'hydrogène

On introduit en 3h30

- 92 mM de THA
- 350 Nl d'éthylène

Après décompression et purge du réacteur, on récupère sous azote 550 g de poudre.

On élimine par tamisage sous azote avec une maille de 500 µm la fraction granulométrique supérieure à 500 µm. Le prépolymère ainsi récupéré sous le tamis est évalué en polymérisation.

EXEMPLE 2

On opère comme dans l'exemple 1 sauf que la poudre de charge de polyéthylène de basse densité (ρ = 0,920, MI$_2$ = 1) possède les caractéristiques granulométriques suivantes : D50 = 900 µm et SPAN = 0,86.

On élimine par tamisage sous azote avec une maille de 1250 µm la fraction granulométrique supérieure à 1250 µm.

EXEMPLE 3

On opère comme dans l'exemple 1 sauf que la poudre de charge de polyéthylène de basse densité (ρ = 0, 910, MI$_2$ = 1) a les caractéristiques granulométriques suivantes : D50 = 1000 µm et SPAN = 0,37.

On élimine par tamissage sous azote avec une maille de 800 µm la fraction granulométrique supérieure à 800 µm.

EXEMPLE 4

On opère comme dans l'exemple 1 sauf que l'on ajoute après évaporation de l'hexane à la place des 350 Nl

d'éthylène, 350 NI d'un mélange butène-1/éthylène ayant un ratio molaire de 0,0466.

EXEMPLE 5

On opère comme dans l'exemple 1 sauf que la poudre de charge est un polyéthylène de haute densité (PEHD), ayant les caractéristiques granulométriques suivantes : D50 = 902 µm, SPAN = 1,08.

EXEMPLE COMPARATIF 1

On opère comme dans l'exemple 1, sauf que l'on n'élimine pas par tamisage sous azote la fraction granulométrique supérieure à 500 µm.

EXEMPLE COMPARATIF 2

On opère comme dans l'exemple 1, sauf qu'on n'élimine pas par tamisage sous azote la fraction granulométrique supérieure à 1250 µm.

EXEMPLE COMPARATIF 3

On opère comme dans l'exemple 3, sauf qu'on n'élimine pas par tamisage sous azote la fraction granulométrique supérieure à 800 µm.

EXEMPLE COMPARATIF 4

On opère comme dans l'exemple 4, sauf qu'on n'élimine pas par tamisage sous azote la fraction granulométrique supérieure à 500 µm.

EXEMPLE COMPARATIF 5

On opère comme dans l'exemple 5 sauf qu'on n'élimine pas par tamisage la fraction granulométrique supérieure à 500 µm.

EXEMPLE 6

Polymérisation avec les prépolymères des exemples 1 à 5 et 1 à 5 comparatifs

On opère dans un réacteur de 8,2 l préalablement séché, muni d'un agitateur tournant à 400 tours/minute, et maintenu à 85°C pendant toute la polymérisation.

Dans le réacteur maintenu sous vide d'environ 1,33Pa en présence de 50 g de polyéthylène de fond de cuve provenant d'un essai de polymérisation identique, on injecte du butène-1 jusqu'à 3 bars absolus, puis 2 bars d'hydrogène et 9 bars d'éthylène.

On introduit ensuite 3 g de prépolymère par poussée à i'azote avec poursuite de l'injection d'azote jusqu'à ce que la pression totale à l'intérieur du réacteur atteigne 21 bars.

On maintient la pression dans le réacteur à cette valeur par injection d'éthylène et de butène-1 dans un rapport molaire butène-1/éthylène égal à 0,0466.

Après 2 heures de réaction, la polymérisation est arrêtée par décompression de réacteur. On purge à l'azote et on laisse refroidir.

Les résultats de polymérisation et les caractéristiques des poudres obtenues sont données dans le tableau suivant :

| | POUDRE DE CHARGE | | | PREPOLYMERE | | | POLYETHYLENE LINEAIRE OBTENU | | | |
|---|---|---|---|---|---|---|---|---|---|---|
| Référence prépolymère | Nature | D50 en μm | SPAN | D50 en μm | SPAN | tamis pour sélection granulo-métrique μm | Produc-tivité en gPE/gcata en 2 heures | D50 en μm | SPAN | % fine < 250 μm (microns) |
| Exemple 1 | LLDPE | 1195 | 5,26 | 200 | 1,0 | 500 | 20189 | 1073 | 1,06 | 0,56 |
| Exemple 1 comparatif | LLDPE | 1195 | 5,26 | 236 | 1,5 | -- | 20500 | 1001 | 1,29 | 3,4 |
| Exemple 2 | LLDDE | 1400 | 0,52 | 217 | 1,1 | 1250 | 15000 | 997 | 1 | 0,9 |
| Exemple 2 comparatif | LLDPE | 1400 | 0,52 | 250 | 1,5 | - | 15650 | 970 | 1,16 | 2,1 |
| Exemple 3 | LLDPE | 1000 | 0,37 | 220 | 1,1 | 800 | 15940 | 1013 | 1,1 | 0,58 |
| Exemple 3 comparatif | LLDPE | 1000 | 0,37 | 245 | 1,5 | -- | 15000 | 946 | 1,14 | 1,37 |
| Exemple 4 | LLDPE | 1195 | 5,26 | 213 | 1,2 | 500 | 20670 | 1009 | 1,18 | 1,66 |
| Exemple 4 comparatif | LLDPE | 1195 | 5,26 | 248 | 1,5 | - | 19500 | 959 | 1,23 | 2,73 |
| Exemple 5 | PEHD | 902 | 1,08 | 200 | 1,0 | 500 | 18254 | 1062 | 1,15 | 1,16 |
| Exemple 5 comparatif | PEHD | 902 | 1,08 | 225 | 1,5 | - | 17980 | 1000 | 1,26 | 1,9 |

**Revendications**

1. Procédé de fabrication d'un catalyseur de polymérisation des oléfines sous forme de prépolymère consistant à prépolymériser en phase gazeuse ou en suspension, de l'éthylène seul ou en mélange avec une alpha-oléfine possédant de 3 à 8 atomes de carbone, le système catalytique étant constitué d'une composante catalytique contenant du titane, du magnésium, du chlore et éventuellement d'un donneur ou accepteur d'électrons et d'un cocatalyseur caractérisé en ce que la prépolymérisation s'effectue en présence d'une poudre de charge constituée d'une résine thermoplastique, et en ce qu'après formation du prépolymère sont éliminées au moins partiellement les particules de poudre de charge.

2. Procédé selon la revendication 1 caractérisé en ce que préalablement à une prépolymérisation en phase gazeuse en présence d'une poudre de charge, l'éthylène seul ou le mélange d'éthylène avec une alpha-oléfine possédant de 3 à 8 atomes de carbone est soumis dans une première étape à une prépolymérisation en suspension dans un liquide inerte qui est éliminé avant la deuxième étape de prépolymérisation en phase gazeuse et élimination de la poudre de charge.

3. Procédé selon la revendication 2 caractérisé en ce que le degré d'avancement de la prépolymérisation en suspension est inférieur à 20 grammes de (co)polymère formé par gramme de composante catalytique.

4. Procédé selon l'une des revendications 1 à 3 caractérisé en ce que la poudre de charge mise en oeuvre représente de 5 à 80 % en poids du prépolymère obtenu en fin de prépolymérisation en phase gazeuse.

5. Procédé selon la revendication 4 caractérisé en ce que la poudre de charge est du polyéthylène.

6. Procédé selon l'une des revendications 1 à 5 caractérisé en ce qu'on élimine du prépolymère formé les particules dont la taille est supérieure à 1000 µm et éventuellement supérieure à 500 µm.

7. Procédé selon l'une des revendications 1 à 6 caractérisé en ce que la poudre de charge possède une granulométrie moyenne de valeur supérieure à : D50 du catalyseur x (degré d'avancement de prépolymérisation)$^{1/3}$.

**Patentansprüche**

1. Verfahren zur Herstellung eines Katalysators zur Polymerisation von Olefinen in Form eines Prepolymers, wobei das Verfahren darin besteht, in der Gasphase oder in Suspension Ethylen allein oder in Mischung mit einem $\alpha$-Olefin mit 3 bis 8 Kohlenstoffatomen zu prepolymerisieren, wobei das katalytische System aus einer katalytischen Komponente, die Titan, Magnesium, Chlor enthält und gegebenenfalls einem Elektronendonor oder -akzeptor und einem Cokatalysator besteht, dadurch gekennzeichnet, daß die Prepolymerisation in Gegenwart eines Füllstoffpulvers durchgeführt wird, das aus einem thermoplastischen Harz besteht, und daß nach Bildung des Prepolymers die Füllstoffpulverpartikel zumindest teilweise entfernt werden.

2. Verfahren nach Anspruch 1, dadurch gekennzeichnet, daß vor der Prepolymerisation in der Gasphase in Gegenwart eines Füllstoffpulvers das Ethylen allein oder die Mischung des Ethylens mit einem $\alpha$-Olefin mit 3 bis 8 Kohlenstoffatomen in einem ersten Schritt einer Prepolymerisation in Suspension in einer inerten Flüssigkeit unterworfen wird, die vor dem zweiten Schritt der Prepolymerisation in gasförmiger Phase und Entfernung des Füllstoffpulvers entfernt wird.

3. Verfahren nach Anspruch 2, dadurch gekennzeichnet, daß der Grad des Fortschreitens der Prepolymerisation in Suspension weniger als 20 g des gebildeten (Co-)Polymers pro g der katalytischen Komponente beträgt.

4. Verfahren nach einem der Ansprüche 1 bis 3, dadurch gekennzeichnet, daß das eingesetzte Füllstoffpulver 5 bis 80 Gew.-% des am Ende der Prepolymerisation in gasförmiger Phase erhaltenen Prepolymers darstellt.

5. Verfahren nach Anspruch 4, dadurch gekennzeichnet, daß das Füllstoffpulver Polyethylen ist.

6. Verfahren nach einem der Ansprüche 1 bis 5, dadurch gekennzeichnet, daß man vom gebildeten Prepolymer die Teilchen entfernt, deren Größe mehr als 1.000 µm und gegebenenfalls mehr als 500 µm beträgt.

**7.** Verfahren nach einem der Ansprüche 1 bis 6, dadurch gekennzeichnet, daß das Füllstoffpulver eine mittlere Granulometrie besitzt mit einem Wert oberhalb von:
D50 des Katalysators x (Grad des Fortschreitens der Prepolymerisation)$^{1/3}$.

## Claims

**1.** Process for the production of a catalyst for the polymerization of olefins, in the form of prepolymer, consisting in the prepolymerization, in the gas phase or in suspension, of ethylene on its own or as a mixture with an alpha-olefin having from 3 to 8 carbon atoms, the catalyst system consisting of a catalyst component containing titanium, magnesium, chlorine and, where appropriate, an electron-donor or electron-acceptor and of a cocatalyst, characterized in that the prepolymerization takes place in the presence of a filler powder consisting of a thermoplastic resin and in that, after formation of the prepolymer, the filler powder particles are at least partially removed.

**2.** Process according to Claim 1, characterized in that, prior to a gas phase prepolymerization in the presence of a filler powder, the ethylene on its own or the mixture of ethylene with an alpha-olefin having from 3 to 8 carbon atoms is subjected, in a first step, to a prepolymerization in suspension in an inert liquid which is removed before the second step of gas phase prepolymerization and removal of the filler powder.

**3.** Process according to Claim 2, characterized in that the degree of progression of the suspension prepolymerization is less than 20 grams of (co)polymer formed per gram of catalyst component.

**4.** Process according to one of Claims 1 to 3, characterized in that the filler powder used represents from 5 to 80 % by weight of the prepolymer obtained at the end of gas phase prepolymerization.

**5.** Process according to Claim 4, characterized in that the filler powder is polyethylene.

**6.** Process according to one of Claims 1 to 5, characterized in that the particles whose size is larger than 1000 µm and optionally larger than 500 µm are removed from the prepolymer formed.

**7.** Process according to one of Claims 1 to 6, characterized in that the filler powder has an average particle size of value greater than: D50 of the catalyst x (degree of progression of prepolymerization)$^{1/3}$.